# FASCICULE DE BREVET EUROPEEN

(11) **EP 0 685 044 B1**
(45) Date de publication et mention de la délivrance du brevet: **27.08.1997**
(21) Numéro de dépôt: 95904563.4
(22) Date de dépôt: 19.12.1994
(51) Int. Cl.: F16F 15/12, F16D 3/12

(54) **DISPOSITIF D'AMORTISSEMENT POUR LA COMPENSATION D'A-COUPS DE ROTATION ET EMBRAYAGE A FRICTION COMPORTANT UN TEL DISPOSITIF**
DÄMPFUNGSEINRICHTUNG ZUM AUSGLEICHEN VON DREHSTÖSSEN UND REIBUNGSKUPPLUNG MIT EINER DERARTIGEN VORRICHTUNG
DAMPING DEVICE FOR COMPENSATING ROTATION JERKS, AND FRICTION CLUTCH COMPRISING SUCH DEVICE

(30) Priorité: 23.12.1993 FR 9315579
(43) Date de publication de la demande: 06.12.1995
(73) Titulaire: VALEO, 75017 Paris (FR)
(72) Inventeur: MOKDAD, Ayman, F-93400 Saint-Ouen (FR); DUCLOS, Didier, F-77330 Ozoir-la-Ferrière (FR)
(74) Mandataire: Gamonal, Didier
(86) Numéro de dépôt international: FR9401484
(87) Numéro de publication internationale: WO9517616

(56) Documents cités:
- EP-A- 0 507 212
- DE-A- 2 829 644
- DE-A- 2 933 586
- GB-A- 714 644
- US-A- 1 641 230

## Description

La présente invention concerne un dispositif d'amortissement pour la compensation d'à-coups de rotation et filtration des vibrations du type comportant des moyens d'amortissement qui sont disposés entre deux parties tournantes coaxiales.

L'invention trouve plus particulièrement à s'appliquer à un embrayage de véhicule automobile dans lequel est intégré un dispositif d'amortissement dont les deux parties tournantes sont liées en rotation respectivement au moteur à combustion d'un groupe motopropulseur du véhicule automobile et à l'arbre d'entrée d'une boîte de vitesses du groupe motopropulseur.

L'invention concerne plus particulièrement un dispositif d'amortissement du type de ceux décrits et représentés dans les documents FR-A-1.445.551 et DE-A-3.243.644, qui décrivent et représentent des dispositifs d'amortissement du type dans lequel les moyens d'amortissement comportent au moins un bloc en matériau déformable élastiquement, qui est interposé entre les deux parties tournantes et sur lequel agit un mécanisme comprenant une came liée en rotation à l'une des deux parties tournantes et un élément suiveur de came lié en rotation à l'autre des deux parties tournantes.

Dans les différents exemples de conception d'un tel dispositif illustrés dans ces documents, le bloc en matériau déformable élastiquement et constitué par un bloc de caoutchouc naturel ou synthétique qui est sollicité en traction ou en compression en fonction du déplacement angulaire relatif des deux parties tournantes.

Dans l'un des cas, il est prévu une série de rondelles en caoutchouc qui sont sollicitées en compression. Cette conception ne procure pas un effet d'amortissement suffisant et elle nécessite de faire appel à des ressorts hélicoïdaux de compression complémentaires.

Dans un second cas, le bloc en matériau déformable élastiquement est un bloc adhérisé entre deux surfaces cylindriques parallèles, dont l'une est mobile et subit un effort de traction qui est transmis au bloc sous l'effet de la rotation relative des deux parties d'inertie. Cette solution n'est pas entièrement satisfaisante dans la mesure où elle ne procure pas une progressivité suffisante de l'effet d'amortissement et dans la mesure où le couple d'amortissement résistant est toujours sensiblement proportionnel à l'angle de déplacement relatif des masses d'inertie.

La présente invention a pour but de proposer une nouvelle conception d'un dispositif d'amortissement du type mentionné précédemment, dont la conception soit simple et dont l'effet d'amortissement soit particulièrement efficace et puisse notamment procurer un couple d'amortissement, dont la valeur ne soit pas simplement proportionnelle à l'angle de déplacement relatif des deux parties d'inertie.

Dans ce but, l'invention propose un dispositif d'amortissement du type mentionné précédemment, caractérisé en ce que la came est formée sur un basculeur qui est monté articulé par rapport à une première des deux parties tournantes autour d'un pivot excentré par rapport à l'axe de rotation des deux parties tournantes, et en ce que l'élément suiveur de came est un galet qui est monté tournant autour d'un axe porté par la seconde partie tournante et qui coopère avec la came lorsque les deux parties tournent l'une par rapport à l'autre dans un premier sens de rotation.

Grâce à l'invention, par rapport à une disposition à ressorts hélicoïdaux, il est possible de transmettre un couple moins important pour le régime de ralenti du moteur et de transmettre un couple plus important en fin de débattement entre les deux parties. En outre, il n'est pas nécessaire de prévoir un dispositif de frottement spécifique du fait que le dispositif d'amortissement comporte un bloc en matériau élastiquement déformable avec un frottement intrinsèque. Ce bloc travaille dans de bonnes conditions.

Selon d'autres caractéristiques de l'invention :
- l'axe du galet est excentré par rapport à l'axe de rotation des deux parties tournantes pour attaque avec jeu de l'une des extrémités de la came à partir de la position de repos ;
- la came est une portion de surface courbe concave formée sur une face du basculeur tournée vers l'axe de rotation des deux parties tournantes ;
- le bloc en matériau déformable élastiquement est interposé entre la première partie tournante et le basculeur ;
- le bloc en matériau déformable élastiquement est interposé entre une portion de surface cylindrique concave de la première partie tournante et une portion de surface courbe convexe formée sur le basculeur ;
- les portions de surfaces concave et convexe formées sur le basculeur sont sensiblement elliptiques et parallèles ;
- les portions de surfaces concave et convexe formées sur le basculeur s'étendent sensiblement sur 180° d'angle au centre ;
- le bloc en matériau déformable élastiquement est réalisé en deux parties agencées de part et d'autre du pivot du basculeur ;
- les deux parties du bloc en matériau déformable possèdent des caractéristiques élastiques différentes ;
- le bloc en matériau déformable élastiquement est un bloc en matériau élastomère fixé par adhérisation auxdites portions de surfaces concave cylindrique de la première masse tournante et convexe du basculeur ;
- le basculeur comporte un balourd susceptible de provoquer son basculement sous l'effet de la force centrifuge pour modification de la courbe caractéristique (couple transmis - débattement) du dispositif d'amortissement ;
- pour une position angulaire relative de repos des deux parties tournantes dans laquelle le bloc en matériau déformable élastiquement n'est pas sollicité, le galet est agencé en regard de l'une des deux extrémités opposées de la came ;
- le dispositif comporte un second galet qui est monté tournant autour d'un axe excentré porté par la seconde partie tournante qui, dans ladite position de repos, est agencé en regard de l'autre des deux extrémités opposées de la came et qui coopère avec la came lorsque les deux parties tournantes tournent l'une par rapport à l'autre dans un second sens de rotation ;
- les axes des deux galets sont diamétralement opposés ;
- le dispositif présente une symétrie de conception par rapport à l'axe de rotation des deux masses tournantes.

L'invention propose également un embrayage à friction de véhicule automobile, caractérisé en ce qu'il comporte un dispositif d'amortissement réalisé conformément aux enseignements de l'invention, la seconde partie tournante du dispositif d'amortissement constituant par exemple le plateau de réaction de l'embrayage avec lequel coopère un disque de friction.

Cette application est particulièrement avantageuse. En effet le dispositif d'amortissement fait partie alors d'un système à volant amortisseur dont la fréquence de résonance est située en-dessous du régime de ralenti du moteur.

Pour cette raison, comme décrit par exemple dans le document FR-A-2 571 461, on prévoit un limiteur de couple pour absorber les vibrations à l'arrêt et au démarrage du moteur du véhicule lorsque l'on passe par la fréquence de résonance.

En variante comme décrit dans le document FR-A-2 553 848 on peut prévoir un dispositif de verrouillage sensible à la force centrifuge.

Grâce à l'invention il n'y a pas besoin de prévoir de tels dispositifs coûteux car le dispositif d'amortissement permet d'absorber les vibrations lorsque l'on passe par la fréquence de résonance.

En outre il n'y a pas besoin de prévoir de dispositif d'hystérésis comme dans le document FR-A-2 571 461.

On notera que l'on peut obtenir un amortissement plus faible pour le régime de ralenti du moteur ce qui est très favorable.

En outre il n'y a pas besoin de graisser les ressorts comme réalisé de manière habituelle pour les volants amortisseurs à ressorts hélicoïdaux.

De plus on peut obtenir des débattements angulaires relatifs plus importants entre les deux parties tournantes qu'avec une disposition à ressorts hélicoïdaux.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale, selon la ligne 1-1 de la figure 2, d'un exemple de réalisation d'un dispositif d'amortissement conforme aux enseignements de l'invention qui est intégré à l'intérieur d'un volant d'un embrayage à friction de véhicule automobile ;
- la figure 2 est une vue en section selon la ligne 2-2 de la figure 3 qui illustre certains des composants du dispositif d'amortissement et notamment la première masse tournante équipée des blocs en matériau élastomère, des basculeurs et sur laquelle on a également représenté les galets formants éléments suiveurs de cames ;
- la figure 3 est une vue en section du dispositif d'amortissement selon la ligne 3-3 de la figure 2 ;
- la figure 4 est une vue schématique similaire à celle de la figure 2 qui illustre les positions relatives occupées par les différents composants du dispositif d'amortissement lorsque les deux masses d'inertie tournent l'une par rapport à l'autre dans un premier sens de rotation ;
- la figure 5 est une vue similaire à celle de la figure 4 correspondant à l'autre sens de déplacement relatif des masses d'inertie ; et
- la figure 6 est un diagramme illustrant la courbe du couple résistant procuré par le dispositif d'amortissement en fonction du débattement angulaire relatif des masses d'inertie.

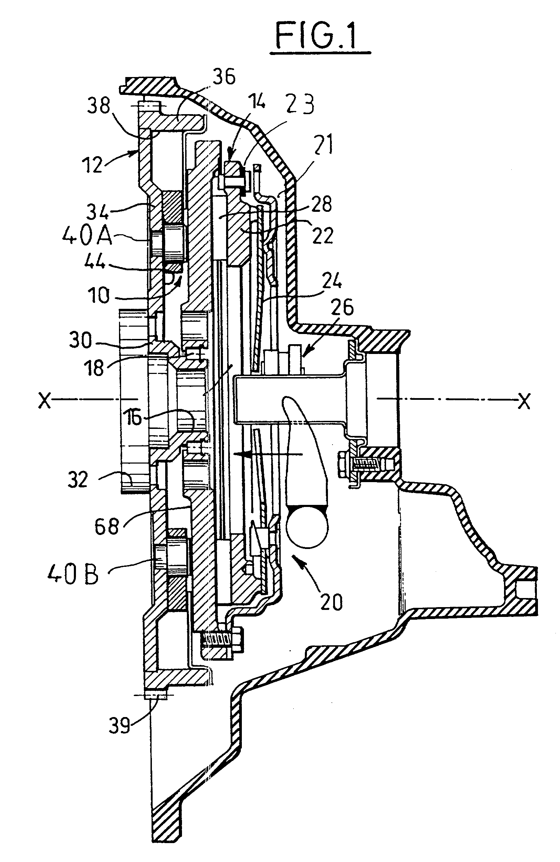

On a représenté sur la figure 1 un dispositif d'amortissement 10 pour véhicule automobile, également appelé volant amortisseur, qui est constitué pour l'essentiel par une première partie d'inertie tournante 12 en forme générale de plateau et par une seconde partie tournante coaxiale 14 en forme de plateau qui s'étendent parallèlement l'une à l'autre. Les deux parties constituent donc ici des masses.

Ainsi la seconde masse tournante 14 est montée à rotation sur un moyeu 16 de la première masse tournante 12 par l'intermédiaire ici d'un roulement à billes 18 de manière que les deux masses 12 et 14 puissent tourner l'une par rapport à l'autre autour d'un axe X-X.

La seconde masse tournante 14 constitue le plateau de réaction d'un mécanisme d'embrayage à friction 20 illustré de manière schématique et comportant un plateau de pression 22, un diaphragme 24 susceptible d'être actionné par une butée d'embrayage 26, et un couvercle 21.

Ainsi par rapport à une solution classique avec un volant formant le plateau de réaction de l'embrayage, on divise ici le volant en deux parties de manière décrite ci-après.

Ici le plateau de pression 22 est lié en rotation au couvercle 21 avec mobilité axiale, de manière connue en soi, par l'intermédiaire de languettes tangentielles 23. Le diaphragme 24 est monté de manière basculante sur le couvercle 21 par l'intermédiaire de colonnettes, dont l'une est visible dans la partie basse de la figure 1. Ce diaphragme sollicite le plateau de pression 22 en direction du plateau de réaction 14.

L'embrayage à friction 20 comporte également un disque de friction 28 qui est reliée à un moyeu central (non visible), calé en rotation sur l'arbre d'entrée de la boîte de vitesses.

Le mécanisme d'embrayage 20 est d'une conception classique connue et ne sera pas décrit ici plus en détail.

Pour mémoire on rappellera que l'ensemble des pièces 21,22,23,24 forme un mécanisme d'embrayage fixé par son couvercle 21, en forme d'assiette creuse, sur le plateau de réaction 14. Normalement les garnitures de frottement, que présente le disque 28, sont serrées, sous l'action du diaphragme 24, entre les plateaux 14-22 en sorte que l'embrayage est engagé.

Pour débrayer il faut agir ici en poussant sur les extrémités des doigts du diaphragme 24 à l'aide de la butée 26 pour désengager l'embrayage.

La première masse tournante 12 est prévue pour être reliée, ici par vissage, par sa partie interne 30 à un vilebrequin 32 du moteur à combustion interne d'un véhicule automobile, tandis que la seconde masse tournante 14 est liée en rotation, par l'intermédiaire du mécanisme d'embrayage à friction 20, à l'arbre d'entrée de la boîte de vitesses du véhicule (non représentée).

La première masse tournante 12 est constituée pour l'essentiel par une partie centrale 34 en forme de plaque ou flasque, qui se prolonge à son bord radial extérieur par une jupe annulaire cylindrique en forme de couronne 36, dont l'extérieur porte des dents 39 prévues pour coopérer avec le pignon d'un démarreur (non représenté) et dont la surface cylindrique concave interne 38 s'étend axialement en regard de la seconde masse tournante 14. La partie interne 30 de cette plaque 34 est dotée de trous pour passage des vis de fixation (non visibles) de la plaque 34 au vilebrequin 32.

Comme on peut le constater sur les figures 1 à 3, le dispositif d'amortissement 10 présente une symétrie générale de conception par rapport à l'axe X-X.

La plaque centrale 34 de la première masse tournante 12 porte deux pivots 40A et 40B, qui sont diamétralement opposés et dont chacun porte à rotation un basculeur 42A, 42B.

Chaque basculeur 42A, 42B peut ainsi pivoter dans les deux sens de rotation autour de son pivot 40A, 40B en regard de la face interne 44 de la plaque centrale 34 de la première masse tournante 12.

Chaque basculeur 42A, 42B comporte un profil intérieur de came courbe concave 46A, 46B de forme sensiblement elliptique, dont la concavité est tournée vers l'axe X-X et qui s'étend sensiblement sur 180° d'angle au centre.

La came 46A, 46B s'étend le long de deux branches 48A - 50A, 48B - 50B du basculeur, dont chacune s'étend angulairement d'un côté du pivot 40A, 40B mais qui sont ici de longueurs inégales.

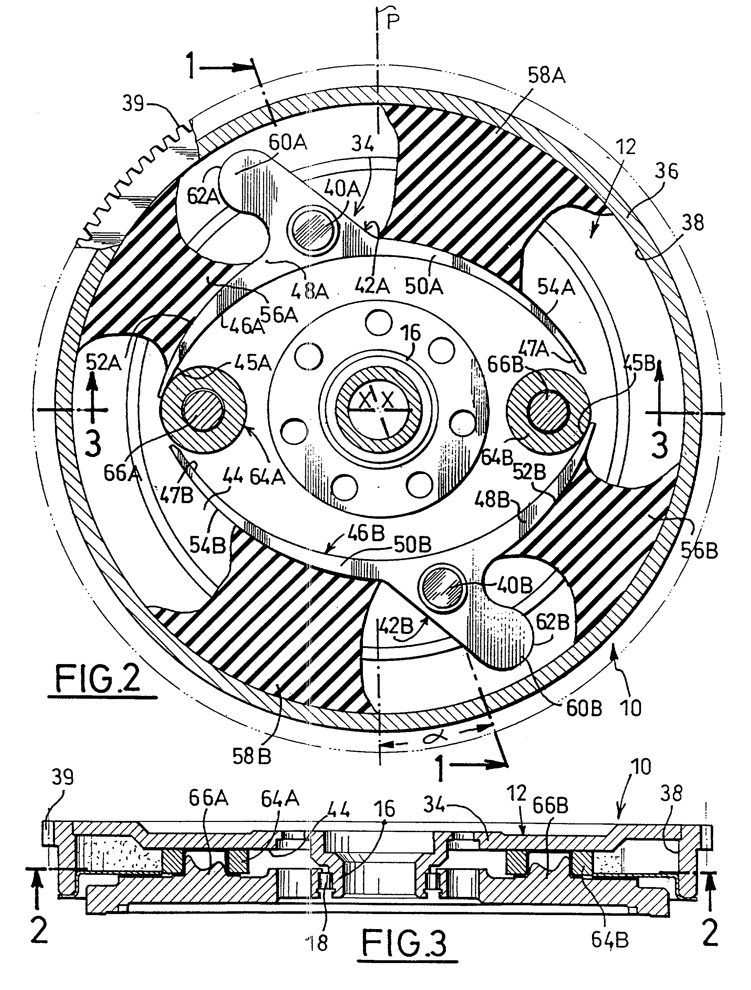

En effet, les pivots 40A, 40B sont décalés angulairement par rapport au plan vertical P de la figure 2 d'un angle Ó.

Chacune des branches 48A - 50A, 48B - 50B du basculeur 42A, 42B délimite une portion de surface externe elliptique convexe 52A - 54A, 52B - 54B qui est sensiblement parallèle au profil de la came correspondante 46A, 46B et qui s'étendent en regard de la surface cylindrique concave 38 de la première masse tournante 12.

Chaque basculeur 42A, 42B est relié à la première masse tournante 12 par un bloc en matériau élastomère ou en caoutchouc en deux parties 56A - 58A, 56B - 58B dont chacune est adhérisée d'une part sur la portion de surface en vis-à-vis de la surface cylindrique 38 et sur la portion de surface convexe et elliptique en vis-à-vis 52A - 54A,52B - 54B. Les blocs, en matière élastique, sont par exemple collés ou vulcanisés in situe sur lesdites portions de surface.

Dans la position de repos illustrée sur les figures 1 à 3, les blocs en matériau élastomère en deux parties ne sont soumis à aucun effet de compression ou de traction.

On notera également que les parties 56A et 56B sont de plus petites dimensions que les parties 58A et 58B et possèdent ainsi des caractéristiques élastiques de compression et de traction qui sont inégales.

Chaque basculeur 42A, 42B comporte également un renflement excentré 60A, 60B situé radialement à l'extérieur par rapport au niveau 40A, 40B de profil externe arrondi 62A, 62B qui constitue, pour chaque basculeur 42A, 42B un balourd qui est susceptible de provoquer le pivotement du basculeur sous l'effet de la force centrifuge. Ainsi, on peut modifier la courble C1 de la figure 1 en fonction de la force centrifuge.

Le dispositif d'amortissement 10 comporte également deux galets suiveurs de cames 64A et 64B qui sont agencés excentrés par rapport à l'axe X-X et globalement diamétralement opposés.

Chaque galet 64A, 64B est monté à rotation libre sur un renflement cylindrique 66A, 66B qui s'étend axialement depuis la face 68 de la seconde masse tournante 14 tourné vers la face 44 de la première masse tournante 12.

En variante les galets 64A,64B peuvent être du type à roulement à billes ou à aiguilles montés sur des axes associés portés par la seconde masse.

Dans le mode de réalisation illustré sur les figures, les renflements 66A et 66B formant pivots sont réalisés venus de matière par moulage avec la seconde masse tournante 14, usuellement en fonte. Cette disposition est particulièrement économique.

Dans la position de repos illustrée sur les figures 1 à 3, chaque galet 64A, 64B est agencé en regard d'une première extrémité 45A, 45B de la came 46A, 46B avec laquelle il est légèrement en contact et regard de la seconde extrémité 47B, 47A de l'autre extrémité de l'autre came 46B,46A avec un léger jeu.

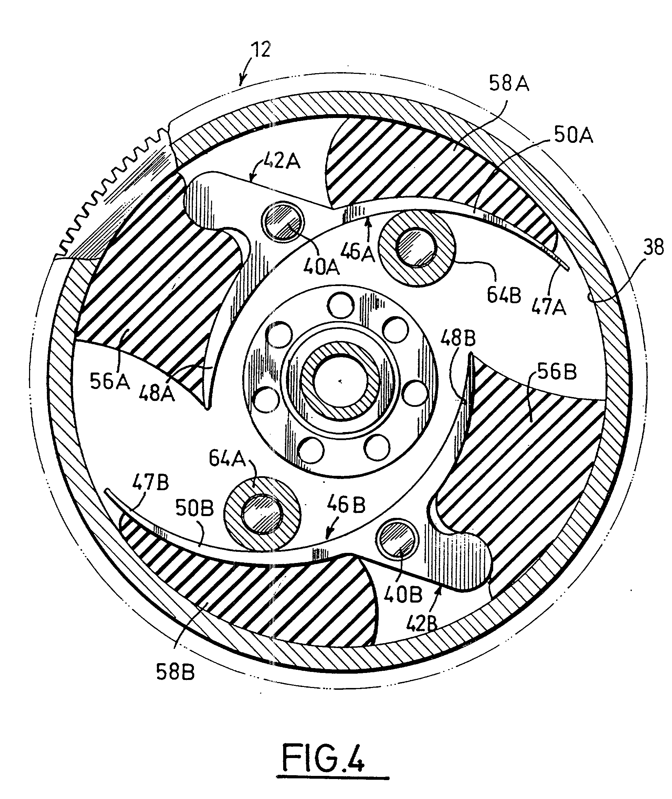

On décrira maintenant le mode de fonctionnement du dispositif d'amortissement illustré aux figures 1 à 3 en se reportant notamment aux figures 4 à 6.

Pour la simplicité des explications, on supposera que la première masse tournante 12 est fixe et que c'est la seconde masse tournante 14 qui tourne, autour de l'axe X-X, par rapport à la première masse tournante 12 et ceci dans les deux sens opposés de rotation.

En partant de la position illustrée sur la figure 2, et lorsque la seconde masse tournante 14 qui porte les galets 64A et 64B tourne dans le sens anti-horaire en considérant la figure 1, les galets 64A, 64B provoquent simultanément le basculement des basculeurs 42A, 42B chacun autour de son pivot 40A, 40B dans le sens anti-horaire en considérant les figures 2 et 4.

Le débattement angulaire relatif dans le sens anti-horaire, également appelé sens direct, peut par exemple atteindre la valeur de 60° illustrée sur la figure 4.

On constate que les premières parties 58A, 58B des blocs en matériau élastomère sont comprimées par les grandes branches 50A, 50B des basculeurs 42A, 42B, tandis que les secondes parties 56A, 56B des blocs en matériau élastomère sont soumises à un effort de traction par les petites branches 48A, 48B des basculeurs 42A, 42B.

Au cours de ce débattement angulaire relatif, les galets 64B, 64A coopèrent avec une première partie des cames 46A, 46B qui s'étend depuis la seconde extrémité 47A, 47B de chaque came en direction de leur partie centrale.

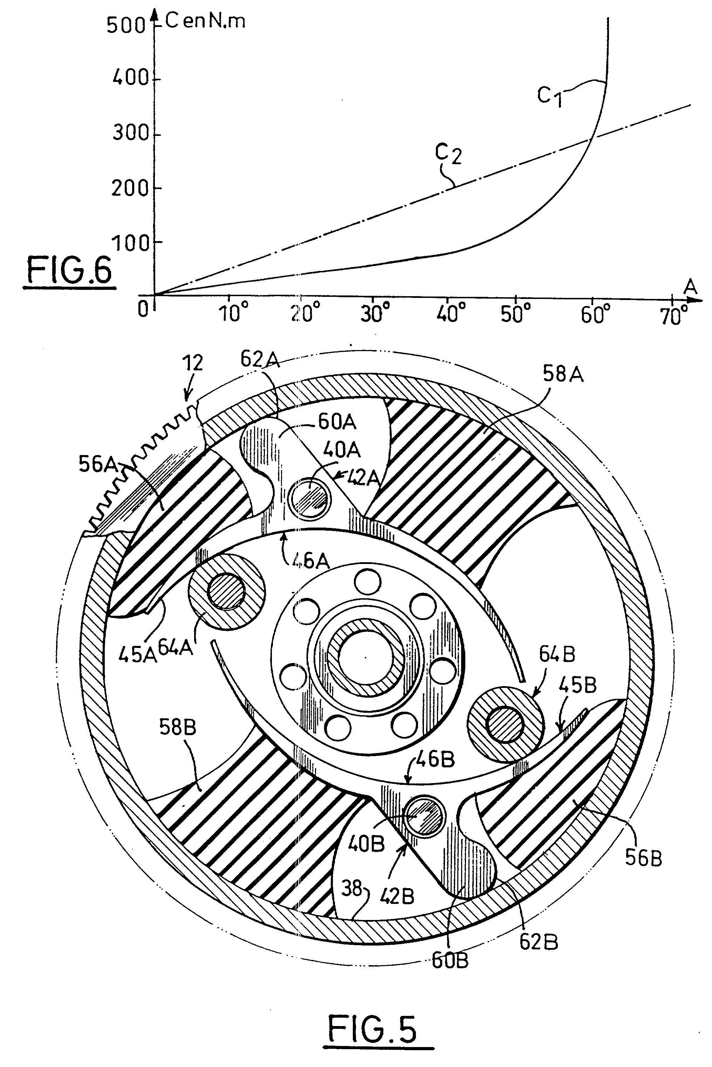

Grâce à la conception selon l'invention qui fait appel à un basculeur qui agit sur un bloc en matériau élastomère en deux parties travaillant en compression et en traction, il est possible d'obtenir une courbe C1 du couple résistant procuré par le dispositif d'amortissement 10, qui est illustrée sur la figure 6, qui montre que la valeur du couple croît sensiblement de manière exponentielle au-delà d'un débattement angulaire relatif supérieur à 40°, courbe qui est particulièrement favorable si on la compare à la droite C2 qui illustre la valeur du couple résistant en fonction de l'angle de débattement d'un dispositif de l'art antérieur à variation proportionnelle du couple résistant en fonction du débattement angulaire, les organes élastiques étant des ressorts à boudin à action circonférentielle.

Ainsi en comparant les courbes C1 et C2, on obtient un amortissement plus faible pour le régime de ralenti du moteur du véhicule et plus élevée en fin de débattement.

Ainsi on amorti mieux les vibrations au régime de ralenti du moteur et on amorti bien les vibrations à l'arrêt et au démarrage du moteur lorsque l'on passe par la fréquence de résonance (grands débattements).

Lorsque la seconde masse tournante 14 tourne, à partir de la position de repos illustrée sur la figure 2, dans le sens horaire par rapport à la première masse tournante 12, et comme cela est illustré sur la figure 5, le galet 64A, 64B coopère avec la portion de la came 46A, 46B qui s'étend depuis la première extrémité 45A, 45B de cette dernière vers sa partie centrale, et ceci pour un angle de débattement maximal d'environ 30° qui est illustré sur la figure 5.

Au cours de ce débat:tement relatif des masses tournantes 12 et 14, chaque basculeur 42A, 42B pivote dans le sens anti-horaire, chacun autour de son pivot 40A, 40B dans le sens horaire, éventuellement jusqu'à ce que le profil courbe 62A, 62B du balourd 60A, 60B vienne en contact avec la surface cylindrique interne 38 de la première masse tournante 12.

Au cours de ce déplacement angulaire relatif, les premières parties 56A, 56B des blocs en matériau élastomère sont comprimées tandis que les parties 58A, 58B sont soumises à un effort de traction.

Grâce aux renflements 60A,60B, on déplace la courbe C1 vers la gauche de la figure 6 en fonction de la force centrifuge.

Bien entendu la présente invention n'est pas limitée à l'exemple de réalisation décrit. En particulier il est possible d'inverser les structures. Ainsi la seconde masse 14 peut porter les pivots 40A,40B et les basculeurs 42A,42B, tandis que la première masse 12 porte alors les galets 64A,64B diamétralement opposés et les renflements 66A,66B. Les galets 64A,64B peuvent, pour la position de repos, être en contact avec la seconde extrémité 47B,47A de l'autre came 46B,46A. L'invention est applicable à un disque de friction comme décrit par exemple dans les documents FR-A-1 445 551 et DE-A-3 243 644 précités.

Les galets peuvent être du type de ceux décrits dans le document FR-A-1 445 551 et comporter une bague montée tourillonnante sur un axe porté par la partie tournante concernée, un bloc en matière élastique étant interposé entre ladite bague et un anneau métallique coopérant avec le basculeur. Dans ce cas la raideur dudit bloc est plus faible que celle des blocs associés au basculeur pour mieux filtrer les vibrations lorsque les blocs 56A-58A, 56B-58B sont comprimés.

Enfin les masses 12,14 peuvent être montées rotatives l'une par rapport à l'autre par l'intermédiaire de moyens de palier du type à palier lisse.

## Revendications

1. Dispositif d'amortissement (10) pour la compensation d'à-coups de rotation du type comportant des moyens d'amortissement qui sont disposés entre deux parties tournantes coaxiales (12, 14) susceptibles d'être liées en rotation respectivement au moteur à combustion d'un groupe motopropulseur de véhicule automobile et à l'arbre d'entrée d'une boîte de vitesses du groupe motopropulseur, et du type dans lequel les moyens d'amortissement comportent au moins un bloc en matériau déformable élastiquement (56A, 58A, 56B, 58B) qui est interposé entre les deux parties tournantes (12, 14) et sur lequel agit un mécanisme comprenant une came (46A, 46B) liée en rotation à l'une (12) des deux parties tournantes (12, 14) et un élément suiveur de came (64A, 64B) lié en rotation à l'autre (14) des deux parties tournantes (12, 14), caractérisé en ce que la came (46A, 46B) est formée sur un basculeur (42A, 42B), qui est monté articulé par rapport à une première (12) des deux parties tournantes (12, 14) autour d'un pivot (40A, 40B) excentré par rapport à l'axe (X-X) de rotation des deux parties tournantes (12, 14), et en ce que l'élément suiveur de came est un galet (64A, 64B) qui est monté tournant autour d'un axe porté par la seconde partie tournante (14, 66A, 66B) et qui coopère avec la came (46A, 46B) lorsque les deux parties (12, 14) tournent l'une par rapport à l'autre dans un premier sens de rotation.

2. Dispositif d'amortissement selon la revendication 1, caractérisé en ce que l'axe (66A, 66B) du galet (64A, 64B) est excentré par rapport à l'axe (X-X) de rotation des deux parties tournantes (12, 14).

3. Dispositif d'amortissement selon la revendication 1 ou 2, caractérisé en ce que la came (46A, 46B) est une portion de surface courbe concave formée sur une face du basculeur (42A, 42B) tournée vers l'axe (X-X) de rotation des deux parties tournantes (12, 14).

4. Dispositif d'amortissement selon la revendication 3, caractérisé en ce que le bloc en matériau déformable élastiquement est interposé entre la première partie tournante (12) et le basculeur (42A, 42B).

5. Dispositif d'amortissement selon la revendication 4, caractérisé en ce que le bloc en matériau déformable élastiquement est interposé entre une portion de surface cylindrique concave (38) de la première partie tournante (12) et une portion de surface courbe convexe formée sur le basculeur (42A, 42B).

6. Dispositif d'amortissement selon la revendication 5 prise en combinaison avec la revendication 3, caractérisé en ce que lesdites portions de surfaces concave (46A et 46B) et convexe (52A - 54A, 52B - 54B) formé sur le basculeur (42A, 42B) sont sensiblement elliptiques et parallèles.

7. Dispositif selon l'une des revendications 5 ou 6, caractérisé en ce que lesdites portions de surfaces concave (46A, 46B) et convexe (52A - 54A, 52B - 54B) s'étendent sensiblement sur 180° d'angle au centre.

8. Dispositif d'amcrtissement selon la revendication 5, caractérisé en ce que le bloc en matériau déformable élastiquement est réalisé en deux parties (56A - 58A, 56B - 58B) agencées de part et d'autre du pivot (40A, 40B) du basculeur (42A, 42B).

9. Dispositif d'amortissement selon la revendication 8, caractérisé en ce que les deux parties (56A - 58A, 56B - 58B) du bloc en matériau déformable élastiquement possèdent des caractéristiques élastiques différentes.

10. Dispositif d'amortissement selon la revendication 5, caractérisé en ce que le bloc en matériau déformable élastiquement est un bloc en matériau élastomère fixé par adhérisation auxdites portions de surfaces concave cylindrique (38) de la première partie tournante (12) et convexe (52A - 54A, 52B - 54B) du basculeur (42A, 42B).

11. Dispositif d'amortissement selon la revendication 2, caractérisé en ce que le basculeur (42A, 42B) comporte un balourd (60A, 60B) susceptible de provoquer son basculement sous l'effet de la force centrifuge.

12. Dispositif d'amortissement selon la revendication 2, caractérisé en ce que, pour une position angulaire relative de repos des deux parties tournantes (12, 14) dans laquelle le bloc en matériau déformable élastiquement n'est pas sollicité, le galet (64A, 64B) est agencé en regard de l'une (45A, 45B) des deux extrémités opposées (45A - 47A, 45B - 47B) de la came (46A, 46B).

13. Dispositif d'amortissement selon la revendication 12, caractérisé en ce qu'il comporte un second galet (64B, 64A) qui est monté tournant autour d'un axe (66B, 66A) excentré porté par la seconde partie tournante (14), qui, dans ladite position de repos, est agencé en regard de l'autre (47A, 47B) des deux extrémités opposées de la came (46A, 46B) et qui coopère avec la came (46A, 46B) lorsque les deux parties tournantes (12, 14) tournent l'une par rapport à l'autre dans un second sens de rotation.

14. Dispositif d'amortissement selon la revendication 13, caractérisé en ce que les axes (66A, 66B) des deux galets (64A, 64B) sont diamétralement opposés.

15. Dispositif d'amortissement selon la revendication 14, caractérisé en ce qu'il présente une symétrie de conception par rapport à l'axe de rotation des deux parties tournantes (12, 14).

16. Dispositif d'amortissement selon l'une quelconque des revendications précédentes, caractérisé en ce que la seconde partie tournante du dispositif d'amortissement (10) constitue le plateau de réaction (14) d'un embrayage à friction (20) avec lequel coopère un disque de friction (28).

## Patentansprüche

1. Dämpfungseinrichtung (10) zum Ausgleichen von Drehstößen, umfassend Dämpfungsmittel, die zwischen zwei koaxialen umlaufenden Teilen (12, 14) angeordnet sind, die drehfest mit dem Verbrennungsmotor eines Kraftfahrzeugtriebwerks bzw. mit der Eingangswelle eines Getriebes des Triebwerks verbunden werden können, wobei die Dämpfungsmittel mindestens einen Block aus elastisch verformbarem Material (56A, 58A, 56B, 58B) umfassen, der zwischen den beiden umlaufenden Teilen (12, 14) eingefügt ist und auf den ein Mechanismus einwirkt, der einen Nocken (46A, 46B), der drehfest mit einem (12) der beiden umlaufenden Teile (12, 14) verbunden ist, und ein Nockennachführelement (64A, 64B) umfaßt, das drehfest mit dem anderen (14) der beiden umlaufenden Teile (12, 14) verbunden ist, **dadurch gekennzeichnet**, daß der Nocken (46A, 46B) auf einer Kippvorrichtung (42A, 42B) ausgebildet ist, die schwenkbar im Verhältnis zu einem ersten (12) der beiden umlaufenden Teile (12, 14) um einen Gelenkzapfen (40A, 40B) gelagert ist, der außermittig im Verhältnis zur Drehachse (X-X) der beiden umlaufenden Teile (12, 14) verläuft, und daß das Nockennachführelement eine Rolle (64A, 64B) ist, die drehbar um eine am zweiten umlaufenden Teil (14, 66A, 66B) angebrachte Achse gelagert ist und die mit dem Nocken (46A, 46B) zusammenwirkt, wenn sich die beiden Teile (12, 14) im Verhältnis zueinander in einer ersten Drehrichtung drehen.

2. Dämpfungseinrichtung nach Anspruch 1, **dadurch gekennzeichnet**, daß die Achse (66A, 66B) der Rolle (64A, 64B) außermittig im Verhältnis zur Drehachse (X-X) der beiden umlaufenden Teile (12, 14) angeordnet ist.

3. Dämpfungseinrichtung nach Anspruch 1 oder 2, **dadurch gekennzeichnet,** daß der Nocken (46A, 46B) eine konkave gekrümmte Teilfläche ist, die auf einer zur Drehachse (X-X) der beiden umlaufenden Teile (12, 14) gerichteten Seite der Kippvorrichtung (42A, 42B) ausgebildet ist.

4. Dämpfungseinrichtung nach Anspruch 3, **dadurch gekennzeichnet**, daß der Block aus elastisch verformbarem Material zwischen dem ersten umlaufenden Teil (12) und der Kippvorrichtung (42A, 42B) eingefügt ist.

5. Dämpfungseinrichtung nach Anspruch 4, **dadurch gekennzeichnet**, daß der Block aus elastisch verformbarem Material zwischen einer konkaven zylindrischen Teilfläche (38) des ersten umlaufenden Teils (12) und einer an der Kippvorrichtung (42A, 42B) ausgebildeten konvexen gekrümmten Teilfläche eingefügt ist.

6. Dämpfungseinrichtung nach Anspruch 5 in Kombination mit Anspruch 3 , **dadurch gekennzeichnet**, daß die besagten konkaven (46A und 46B) und konvexen (52A - 54A, 52B - 54B) Teilflächen, die auf der Kippvorrichtung (42A, 42B) ausgebildet sind, in etwa elliptisch und parallel ausgeführt sind.

7. Dämpfungseinrichtung nach einem der Ansprüche 5 oder 6, **dadurch gekennzeichnet**, daß sich die besagten konkaven (46A, 46B) und konvexen (52A - 54A, 52B - 54B) Teilflächen über einen Mittelpunktswinkel von etwa 180° erstrecken.

8. Dämpfungseinrichtung nach Anspruch 5, **dadurch gekennzeichnet**, daß der Block aus elastisch verformbarem Material aus zwei Teilen (56A - 58A, 56B - 58B) ausgeführt ist, die beiderseits des Gelenkzapfens (40A, 40B) der Kippvorrichtung (42A, 42B) angeordnet sind.

9. Dämpfungseinrichtung nach Anspruch 8, **dadurch gekennzeichnet**, daß die beiden Teile (56A - 58A, 56B - 58B) des Blocks aus elastisch verformbarem Material unterschiedliche Elastizitätseigenschaften besitzen.

10. Dämpfungseinrichtung nach Anspruch 5 , **dadurch gekennzeichnet**, daß der Block aus elastisch verformbarem Material ein Block aus Elastomermaterial ist, der mittels Haftverbindung an der besagten konkaven zylindrischen Teilfläche (38) des ersten umlaufenden Teils (12) und an der besagten konvexen Teilfläche (52A - 54A, 52B - 54B) der Kippvorrichtung (42A, 42B) befestigt ist.

11. Dämpfungseinrichtung nach Anspruch 2 , **dadurch gekennzeichnet**, daß die Kippvorrichtung (42A, 42B) eine Ausbauchung (60A, 60B) umfaßt, die ihr Kippen unter der Einwirkung der Fliehkraft herbeiführen kann.

12. Dämpfungseinrichtung nach Anspruch 2 , **dadurch gekennzeichnet**, daß bei einer relativen Winkelruheposition der beiden umlaufenden Teile (12, 14), in welcher der Block aus elastisch verformbarem Material nicht beaufschlagt ist, die Rolle (64A, 64B) gegenüber einem (45A, 45B) der beiden gegenüberliegenden Enden (45A - 47A, 45B - 47B) des Nockens (46A, 46B) angeordnet ist.

13. Dämpfungseinrichtung nach Anspruch 12 , **dadurch gekennzeichnet** , daß sie eine zweite Rolle (64B, 64A) umfaßt, die drehbar um eine am zweiten umlaufenden Teil (14) angebrachte außermittige Achse (66B, 66A) gelagert ist, die in der besagten Ruheposition gegenüber dem anderen (47A, 47B) der beiden gegenüberliegenden Enden des Nockens (46A, 46B) angeordnet ist und die mit dem Nocken (46A, 46B) zusammenwirkt, wenn sich die beiden umlaufenden Teile (12, 14) im Verhältnis zueinander in einer zweiten Drehrichtung drehen.

14. Dämpfungseinrichtung nach Anspruch 13 , **dadurch gekennzeichnet** , daß sich die Achsen (66A, 66B) der beiden Rollen (64A, 64B) diametral gegenüberliegen.

15. Dämpfungseinrichtung nach Anspruch 14 , **dadurch gekennzeichnet**, daß sie eine Konstruktionssymmetrie im Verhältnis zur Drehachse der beiden umlaufenden Teile (12, 14) aufweist.

16. Dämpfungseinrichtung nach einem der vorangehenden Ansprüche , **dadurch gekennzeichnet**, daß der zweite umlaufende Teil der Dämpfungseinrichtung (10) die Gegenanpreßplatte (14) einer Reibungskupplung (20) bildet, mit der eine Reibungskupplungsscheibe (28) zusammenwirkt.

## Claims

1. Damping device (10) for compensating for rotational jerks, of the type having damping means which are disposed between two coaxial rotating parts (12, 14) able to be coupled in rotation respectively to the combustion engine of a motor vehicle power unit and to the input shaft of a gearbox of the power unit, and of the type in which the damping means include at least one block of elastically deformable material (56A, 58A, 56B, 58B) which is interposed between the two rotating parts (12, 14) and on which there acts a mechanism comprising a cam (46A, 46B) which is coupled in rotation to one (12) of the two rotating parts (12, 14) and a cam follower element (64A, 64B) which is coupled in rotation to the other one (14) of the two rotating parts (12, 14), characterised in that the cam (46A, 46B) is formed on a rocker (42A, 42B), which is mounted so as to be articulated with respect to a first one (12) of the two rotating parts (12, 14) about a pivot (40A, 40B) which is eccentric with respect to the axis (X-X) of rotation of the two rotating parts (12, 14), and in that the cam follower element is a roller (64A, 64B), which is mounted so as to rotate about a shaft carried by the second rotating part (14, 66A, 66B) and which cooperates with the cam (46A, 46B) when the two parts (12, 14) rotate with respect to each other in a first direction of rotation.

2. Damping device according to Claim 1, characterised in that the axis (66A, 66B) of the roller (64A, 64B) is eccentric with respect to the axis (X-X) of rotation of the two rotating parts (12, 14).

3. Damping device according to Claim 1 or 2, characterised in that the cam (46A, 46B) is a concave curved surface portion formed on a face of the rocker (42A, 42B) turned towards the axis (X-X) of rotation of the two rotating parts (12, 14).

4. Damping device according to Claim 3, characterised in that the block of elastically deformable material is interposed between the first rotating part (12) and the rocker (42A, 42B).

5. Damping device according to Claim 4, characterised in that the block of elastically deformable material is interposed between a concave cylindrical surface portion (38) of the first rotating part (12) and a convex curved surface portion formed on the rocker (42A, 42B).

6. Damping device according to Claim 5 taken in combination with Claim 3, characterised in that the said concave surface portions (46A and 46B) and convex surface portions (52A-54A, 52B-54B) formed on the rocker (42A, 42B) are substantially elliptical and parallel.

7. Device according to one of Claims 5 or 6, characterised in that the said concave surface portions (46A, 46B) and convex surface portions (52A-54A, 52B-54B) subtend an angle at the centre of substantially 180°.

8. Damping device according to claim 5, characterised in that the block of elastically deformable material is produced in two parts (56A-58A, 56B-58B) arranged on either side of the pivot (40A, 40B) of the rocker (42A, 42B).

9. Damping device according to Claim 8, characterised in that the two parts (56A-58A, 56B-58B) of the block of elastically deformable material have different elastic characteristics.

10. Damping device according to Claim 5, characterised in that the block of elastically deformable material is a block of elastomeric material secured by adhesive bonding to the said cylindrical concave surface portions (38) of the first rotating part (12) and convex surface portions (52A-54A, 52B-54B) of the rocker (42A, 42B).

11. Damping device according to Cla:im 2, characterised in that the rocker (42A, 42B) includes an unbalanced part (60A, 60B) which is able to cause it to tilt under the effect of centrifugal force.

12. Damping device according to Claim 2, characterised in that, for a relative angular position of rest of the two rotating parts (12, 14) in which the block of elastically deformable material is not acted on, the roller (64A, 64B) is arranged facing one (45A, 45B) of the two opposed ends (45A-47A, 45B-47B) of the cam (46A, 46B).

13. Damping device according to Claim 12, characterised in that it includes a second roller (64B, 64A) which is mounted so as to rotate about an eccentric shaft (66B, 66A) carried by the second rotating part (14) which, in the said position of rest, is arranged facing the other one (47A, 47B) of the two opposed ends of the cam (46A, 46B) and which cooperates with the cam (46A, 46B) when one of the two rotating parts (12, 14) rotates with respect to the other in a second direction of rotation.

14. Damping device according to Claim 13, characterised in that the shafts (66A, 66B) of the two rollers (64A, 64B) are diametrically opposed.

15. Damping device according to Claim 14, characterised in that it has symmetry of design with respect to the axis of rotation of the two rotating parts (12, 14).

16. Damping device according to any one of the preceding claims, characterised in that the second rotating part of the damping device (10) constitutes the reaction plate (14) of a friction clutch (20), with which a friction disc (28) cooperates.
